# EUROPÄISCHE PATENTSCHRIFT

(11) **EP 1 163 095 B1**
(45) Veröffentlichungstag und Bekanntmachung des Hinweises auf die Patenterteilung: **20.11.2002**
(21) Anmeldenummer: 00918711.3
(22) Anmeldetag: 24.03.2000
(51) Int. Cl.: B29C 45/14

(54) **VERFAHREN ZUM VERBINDEN VON ZWEI KUNSTSTOFFBAUTEILEN**
METHOD FOR LINKING TWO PLASTIC COMPONENTS
PROCEDE D'ASSEMBLAGE DE DEUX COMPOSANTS PLASTIQUES

(30) Priorität: 25.03.1999 DE 19913501
(43) Veröffentlichungstag der Anmeldung: 19.12.2001
(73) Patentinhaber: MAHLE Filtersysteme GmbH, 70376 Stuttgart (DE)
(72) Erfinder: BRODESSER, Kay, D-71277 Rutesheim (DE); DRESPLING, Hans, Peter, D-89522 Heidenheim (DE); JENSEN, Hans, D-73237 Kirchheim (DE); KACHLER, Günter, D-74379 Ingersheim (DE); SCHNEIDER, Horst, D-71336 Waiblingen (DE); STEHLIG, Jürgen, D-72666 Neckartailfingen (DE)
(74) Vertreter: Patentanwalts-Partnerschaft, Rotermund + Pfusch + Bernhard
(86) Internationale Anmeldenummer: DE0000883
(87) Internationale Veröffentlichungsnummer: WO00058067

(56) Entgegenhaltungen:
- EP-A- 0 567 702
- FR-A- 2 681 006
- US-A- 4 752 208
- US-A- 5 266 262

## Beschreibung

Die Erfindung betrifft ein Verfahren zum Verbinden eines ersten Bauteiles aus Kunststoff mit einem zweiten Bauteil aus Kunststoff mit den Merkmalen des Oberbegriffes des Anspruches 1.

Ein derartiges Verfahren ist z.B. aus der EP 0 567 702 B1 bekannt. Um bei diesem Verfahren ein erstes Kunststoffbauteil, z.B. ein Saugrohr einer Sauganlage einer Brennkraftmaschine, mit einem zweiten Kunststoffbauteil z.B. ein Flansch dieser Sauganlage zu verbinden, wird das erste Bauteil zumindest mit einem Verbindungsabschnitt, an dem die Verbindung mit dem zweiten Bauteil ausgebildet werden soll, in eine Spritzgußform eingebracht. Das zweite Bauteil wird dann durch Anspritzen von Kunststoff an den Verbindungsabschnitt des ersten Bauteiles ausgebildet, wobei dann eine Oberfläche des Verbindungsabschnittes zumindest teilweise vom Kunststoff des zweiten Bauteiles benetzt wird.

Durch eine entsprechende Formgebung des Verbindungsabschnittes, insbesondere durch eine zunehmende Wandstärke und durch eine entsprechende Einbettung des Verbindungsabschnittes in das Kunststoffmaterial des angespritzten Bauteiles, wobei das angespritzte Bauteil den Verbindungsabschnitt des anderen Bauteils möglichst weitgehend umfaßt bzw. einfaßt, kann eine formschlüssige Verbindung zwischen den Bauteilen ausgebildet werden, die relativ hohen statischen Belastungen ausgesetzt werden kann.

Die US 5 266 262 zeigt blasgeformte Saugrohre, an die ein gemeinsamer Flansch angespritzt wird. Die Saugrohre besitzen Verbindungsabschnitte, die beim Anspritzen in den Kunststoff des Flansches eingebettet werden. An diesen Verbindungsabschnitten sind ringförmige, nach außen abstehende Vorsprünge ausgebildet, die sich im angespritzten Flansch nach Art eines Widerhakens formschlüssig verankern. Die Festigkeit, insbesondere die Zugfestigkeit, dieser Verbindung wird dadurch erhöht.

Aus der US 4.752 208 ist ein Verfahren bekannt, das zum Anspritzen einer Kupplungshülse an einen Wellrohrschlauch dient. Die Spritzform und der Spritzvorgang sind dabei so aufeinander abgestimmt, dass wenigstens zwei Wellen am umspritzten Wellrohrende zusammengedrückt werden, wobei die eine Welle die Spritzform dichtet, während die andere Welle als Anker in die angespritzte Hülle eingebettet ist. Darüber hinaus sind bei diesem Verfahren die Parameter so gewählt, dass das umspritzte Wellrohrende sich erweicht, anschmilzt und mit der angespritzten Hülse eine Stoffschlussverbindung eingeht. Das umspritzte Wellrohrende sowie die zusammengepressten Wellen bleiben dabei jedoch als solche erhalten.

Damit eine derartige Verbindung auch bei hochfrequenten dynamischen Belastungen eine lange Lebenszeit aufweist und um während dieser Lebenszeit eine Dichtheit der Verbindung auch bei hohen Drücken gewährleisten zu können, müssen die Bauteile stoffschlüssig miteinander verbunden werden. Zu diesem Zweck kann das erste Bauteil, an welches das zweite Bauteil angespritzt werden soll, vor dem Einlegen in die Spritzgußform erwärmt werden, derart, daß der Kunststoff im Bereich des Verbindungsabschnittes erweicht bzw. angeschmolzen wird. In diesem Zustand kann dann das erste Bauteil in die Spritzgußform eingelegt werden. Dann erfolgt der Anspritzvorgang, bei dem der flüssige angespritzte Kunststoff und der angeschmolzene Kunststoff an der Oberfläche des ersten Bauteiles miteinander verschmelzen. Auf diese Weise bildet sich beim Erstarren der insoweit miteinander vermischten Schmelzen die angestrebte intensive stoffschlüssige Verbindung aus. Zweckmäßigerweise sind die mit einem Stoffschluß zu verbindenden Kunststoffe kompatibel und beruhen auf demselben Basisstoff.

Ein derartiges Verfahren ist jedoch dann nicht anwendbar, wenn zumindest eines der Bauteile aus einem Kunststoff besteht, der für die Verarbeitbarkeit seiner Schmelze nur einen relativ kleinen oder engen Temperaturbereich aufweist. Das heißt: zwischen einer minimalen Schmelzentemperatur, die für eine Verarbeitung der Schmelze mindestens erforderlich ist, und einer maximalen Schmelzentemperatur, oberhalb der eine bestimmungsgemäße Verarbeitung der Schmelze nicht mehr möglich ist, besteht nur ein relativ kleiner Abstand. Dies ist beispielsweise bei Polyamid-Kunststoffen der Fall. Wenn zum Beispiel das erste Bauteil aus einem solchen Kunststoff besteht, hat sich die durch die Erwärmung ausgebildete Schmelze am Verbindungsabschnitt bis zum Beginn des Anspritzvorganges schon wieder so weit abgekühlt, daß die angestrebte stoffschlüssige Verbindung regelmäßig nicht mehr erzielt werden kann. Darüber hinaus ist das Erwärmen bzw. Anschmelzen des ersten Bauteiles und dessen Überführung in die Spritzgußform relativ aufwendig. Wenn im Unterschied dazu das anzuspritzende Bauteil aus einem Kunststoff der vorgenannten Art besteht, kühlt sich die Spritzmasse rasch unter die vorgenannte minimale Schmelzentemperatur ab, sobald die Spritzmasse beim Anspritzvorgang mit dem ersten Kunststoffbauteil in Kontakt kommt, so daß auch hier die angestrebte hochwertige stoffschlüssige Verbindung regelmäßig nicht erreicht werden kann.

Die vorliegende Erfindung beschäftigt sich mit dem Problem, ein Verfahren der eingangs genannten Art dahingehend auszugestalten, daß zwischen zwei Kunststoffbauteilen relativ preiswert eine stoffschlüssige Verbindung auch dann ausgebildet werden kann, wenn der Kunststoff des einen und/oder des anderen Bauteiles für die Verarbeitbarkeit seiner Schmelze einen relativ kleinen Temperaturbereich aufweist.

Dieses Problem wird erfindungsgemäß durch ein Verfahren mit den Merkmalen des Anspruches 1 gelöst.

Die Erfindung beruht auf dem allgemeinen Gedanken, durch die Ausbildung von Bindekörpern an der Oberfläche des Verbindungsabschnittes des ersten Bauteiles die vom angespritzten Kunststoff an das erste Bauteil übertragene Wärmeenergie so zu orientieren, daß diese Bindekörper dadurch Aufschmelzen und mit dem angespritzten Kunststoff verschmelzen können. Durch die gezielte Wärmeleitung werden somit bevorzugte Schmelzzonen am Verbindungsabschnitt ausgebildet, in denen das Anschmelzen ausreichend schnell erfolgt, um die gewünschte hochwertige stoffschlüssige Verbindung beider Bauteile miteinander auszubilden.

Entsprechend einer bevorzugten Ausführungsform können die Bindekörper durch Erhebungen gebildet sein, die von der Oberfläche des Verbindungsabschnittes abstehen und bei der Herstellung des ersten Bauteiles an diesem ausgeformt sind, so daß die Bindekörper einteilig mit dem Verbindungsabschnitt ausgebildet sind. Durch die Berücksichtigung der Bindekörper bereits bei der Herstellung bzw. Ausformung des ersten Bauteiles, entsteht für die Herstellung des ersten Bauteiles keine Kostenerhöhung. Außerdem sind diese Bindekörper durch ihre Integration in die Form des ersten Bauteiles mit diesem hochwirksam verbunden. Da die Bindekörper von der Oberfläche des Verbindungsabschnittes abstehen, kann die beim Kontakt mit dem angespritzten Kunststoff darauf übertragene Wärme nicht rasch genug über den Verbindungsabschnitt bzw. das erste Bauteil abgeleitet werden, so daß sich ein Wärmestau ausbildet mit der erwünschten Folge, daß der Kunststoff des ersten Bauteils im Bereich des Verbindungsabschnittes an den Bindekörpern anschmilzt und die Verschmelzung mit dem angespritzten Kunststoff ermöglicht.

Durch das erfindungsgemäß vorgeschlagene Verfahren ist es auch möglich, an ein Bauteil aus einem in der Schmelze hochviskosen, das heißt zähflüssigen, Kunststoff ein Bauteil anzuspritzen, das als Spritzteil aus einem in der Schmelze Niederviskosen, das heißt dünnflüssigen, Kunststoff besteht. Denn an den Bindekörpern wird der hochviskose Kunststoff soweit erwärmt und verflüssigt, daß er sich in ausreichendem Maße mit dem niederviskosen angespritzten Kunststoff durchmischen bzw. verbinden kann. Insbesondere ist es dadurch möglich, das erste Bauteil als Blasteil auszubilden, das heißt, das erste Bauteil ist dabei durch ein Blasformverfahren hergestellt. Damit dies möglich ist, muß das erste Bauteil aus einem hochviskosen Kunststoff bestehen.

Um das Anschmelzen der Bindekörper zu verbessern, wird die Temperatur, mit der der Kunststoff des zweiten Bauteiles in die Spritzgußform eingespritzt wird, das heißt die Spritztemperatur, nahe der oberen Grenze eines Temperaturbereiches gewählt, in dem ein Spritzgußverfahren mit diesem Kunststoff durchführbar ist. Durch diese Maßnahme wird die vom eingespritzten Kunststoff auf das erste Bauteil übertragbare Wärmemenge vergrößert.

Weitere wichtige Merkmale und Vorteile des erfindungsgemäßen Verfahrens ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.
- Fig. 1: zeigt einen schematisierten Schnitt durch eine Sauganlage einer Brennkraftmaschine, die unter Verwendung des erfindungsgemäßen Verfahrens hergestellt ist, und
- Fig. 2: zeigt eine vergrößerte Detailansicht eines in Fig. 1 mit II gekennzeichneten Ausschnittes.

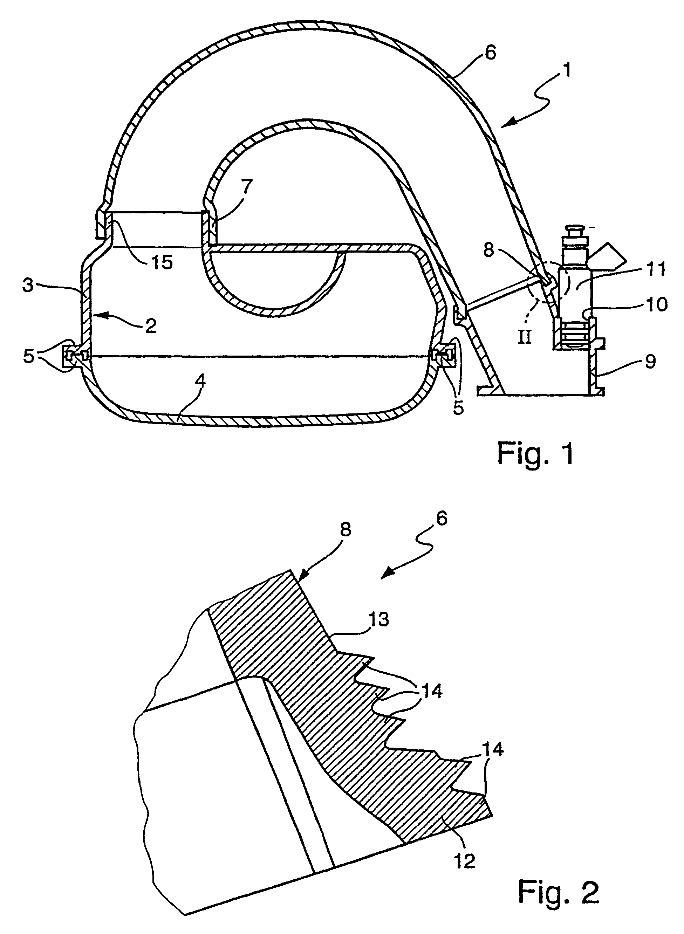

Entsprechend Fig. 1 weist eine modular aufgebaute Sauganlage 1, die bei einer nicht dargestellten Brennkraftmaschine von einer Luftzuführung zugeführte und für die Verbrennung in der Brennkraftmaschine vorgesehene Luft auf einzelne Brennkammern der Brennkraftmaschine verteilt, ein Luftverteilermodul 2 auf, das selbst modular aufgebaut ist und aus einem oberen einteiligen Luftverteileroberteilmodul 3 und aus einem unteren einteiligen Luftverteilerunterteilmodul 4 besteht. Die Luftverteilermodule 3 und 4 weisen jeweils einen nach außen abstehenden, vollständig umlaufenden Kragen oder Bund 5 auf, an denen die beiden Module 3 und 4, insbesondere durch ein Reibschweißverfahren, miteinander verbunden sind.

An der Oberseite des Luftverteileroberteilmoduls 3 sind mehrere einteilige Saugrohrmodule 6 angeschlossen bzw. damit verbunden, von denen in Fig. 1 jedoch nur eines dargestellt ist, da die in Blickrichtung hinter der Schnittebene angeordneten Bestandteile der Sauganlage 1 zur Vereinfachung der Darstellung weggelassen sind. Das Saugrohrmodul 6 ist einenends an einem Rohrende 7 mit dem Luftverteilermodul 2 und anderenends an einem Rohrende 8 mit einem Flanschmodul 9 verbunden, das an der Brennkraftmaschine befestigbar ist. Durch das Saugrohrmodul 6 kann somit die in das Luftverteilermodul 2 eingebrachte Luft in die jeweils zugeordnete Brennkammer der Brennkraftmaschine gelangen.

Im Flanschmodul 9 ist eine Aufnahme 10 ausgespart, in der ein Einspritzventil 11 montierbar ist, was in Fig. 1 angedeutet ist.

### Die Herstellung der Sauganlage 1 erfolgt wie folgt:

Zunächst werden die Saugrohrmodule 6 hergestellt, was vorzugsweise mit Hilfe eines Blasformverfahrens durchgeführt wird, wodurch die Form der Saugrohrmodule 6 relativ einfach variiert werden kann, beispielsweise läßt sich dadurch der Rohrdurchmesser, der Krümmungsradius und die Rohrlänge an unterschiedliche Konfigurationen der Brennkraftmaschine anpassen. Die jeweils einem Flanschmodul 9 zugeordneten Saugrohrmodule 6 werden dann zumindest mit ihren Rohrenden 8 in eine Spritzgußform eingelegt. Danach kann ein Spritzgußverfahren ablaufen, bei dem das Flanschmodul 9 ausgebildet wird. Dabei ist das dem Flansch 9 zugeordnete Rohrende 8 so ausgebildet, daß es bei dem Spritzvorgang beidseitig, das heißt bezüglich des Saugrohrmoduls 6 innen und außen vom Kunststoff des Flanschmoduls 9 eingefaßt wird. Darüber hinaus erweitert sich die Wandstärke des Saugrohrmoduls 6 in diesem Rohrende 8, so daß sich insgesamt eine hochwirksame Verankerung des Saugrohrmoduls 6 im Flanschmodul 9 ausbildet. Das Rohrende 8 ist somit formschlüssig mit dem Flanschmodul 9 verbunden. Um zwischen dem Saugrohrmodul 6 und dem Flanschmodul 9 außerdem eine hochwertig feste und dichte stoffschlüssige Verbindung auszubilden, wird das erfindungsgemäße Verfahren angewendet.

Zu diesem Zweck sind entsprechend Fig. 2 an einem Verbindungsabschnitt 12 des Rohrendes 8, an dem die Verbindung mit dem Flansch 9 ausgebildet wird, zumindest an einer außenliegenden Oberfläche 13 Bindekörper 14 ausgebildet. Diese Bindekörper 14 sind hier in Form von ringförmig umlaufenden Erhebungen ausgebildet, die von der Oberfläche 13 nach außen abstehen und spitz zulaufen. Die Abmessungen dieser Erhebungen sind relativ zu den Abmessungen der miteinander zu verbindenden Bauteile 6, 9 klein. Z.B. stehen die Erhebungen 14 mit 1 mm von der Oberfläche 13 ab. Die Bindekörper 14 sind dabei einteilig mit dem Verbindungsabschnitt 12 ausgebildet, das heißt zusammen mit diesem bei der Herstellung des Saugrohrmoduls 6 ausgeformt. Beim Anspritzen des Kunststoffes zur Ausbildung des Flanschmodules 9 bewirkt die gewählte Geometrie der Bindekörper 14, daß sich in diesen die vom angespritzten Kunststoff auf den Verbindungsabschnitt 12 übertragene Wärmeenergie sammelt und ein Anschmelzen der Bindekörper 14 bewirkt. Auf diese Weise können die Schmelzen sich miteinander mischen, wobei die beiden Bauteile (6 und 9) im Bereich ihrer Anbindung miteinander verschmolzen werden. Durch die Erstarrung dieser im Bereich der Anbindung gemeinsamen Schmelze der beiden Bauteile kommt es zur erwünschten form- und stoffschlüssigen, dichten und festen Verbindung zwischen den Bauteilen 6 und 9.

Nach der Durchführung des erfindungsgemäßen Verfahrens werden gemäß Fig. 1 die vom Flanschmodul 9 abgewandten Rohrenden 7 der Saugrohrmodule 6 mit dem Luftverteilermodul 2 verbunden, wozu hier der Anschluß des Saugrohrmoduls 6 an das Luftverteilermodul 2 als Steckverbindung ausgebildet ist. Das Rohrende 7 bildet dabei einen Außenstutzen, während das Luftverteileroberteilmodul 3 einen Innenstutzen 15 aufweist. Die Verbindung der ineinandergesteckten Stutzen 7 und 15 kann dann in herkömmlicher Weise, z.B. durch eine Schweißverbindung, Schrumpfverbindung, Klebverbindung oder durch eine Kombination verschiedener Befestigungsmethoden durchgeführt werden. An das Luftverteileroberteilmodul 3 wird dann z.B. mit einem Reibschweißverfahren das Luftverteilerunterteilmodul 4 angeformt.

Fig. 2 zeigt einen Teil des Rohrendes 8 vor dem Anspritzen des zweiten Bauteiles 9, das heißt zu einem Zeitpunkt, zu dem die Erhebungen bzw. Bindekörper 14 noch nicht durch den Anspritzvorgang deformiert bzw. mit dem angespritzten Kunststoff verschmolzen sind. Durch das erfindungsgemäße Verfahren gehen die Bindekörper 14 zumindest teilweise in der Schmelze bzw. in der Spritzgußmasse auf und werden dadurch in das Spritzgußteil 9 integriert.

## Patentansprüche

1. Verfahren zum Verbinden eines ersten Bauteiles (6) aus Kunststoff mit einem zweiten Bauteil (9) aus Kunststoff,
wobei das erste Bauteil (6) zumindest mit einem Verbindungsabschnitt, an dem die Verbindung mit dem zweiten Bauteil (9) ausgebildet werden soll, in eine Spritzgußform eingebracht wird,
wobei das zweite Bauteil (9) durch Anspritzen von Kunststoff an den Verbindungsabschnitt (12) des ersten Bauteils (6) ausgebildet wird,
wobei eine Oberfläche (13) des Verbindungsabschnittes (12) zumindest teilweise vom Kunststoff des zweiten Bauteiles (9) benetzt wird,
**dadurch gekennzeichnet,**
**daß** an der für die Benetzung durch den Kunststoff des zweiten Bauteiles (9) vorgesehenen Oberfläche (13) des Verbindungsabschnittes (12) wenigstens ein damit fest verbundener Bindekörper (14) vorgesehen ist, der so ausgebildet ist, daß er beim Anspritzen des Kunststoffes des zweiten Bauteiles (9) durch die Wärmeenergie des angespritzten Kunststoffes aufschmilzt und mit dem angespritzten Kunststoff verschmilzt, wobei der Bindekörper (14) zumindest teilweise im angespritzten Kunststoff aufgeht und in das angespritzte Bauteil (9) integriert wird.

2. Verfahren nach Anspruch 1,
**dadurch gekennzeichnet,**
**daß** jeder Bindekörper (14) durch eine Erhebung gebildet ist, die von der Oberfläche (13) des Verbindungsabschnittes (12) absteht und bei der Herstellung des ersten Bauteiles (6) an diesem angeformt ist, so daß jeder Bindekörper (14) einteilig mit dem Verbindungsabschnitt (12) ausgebildet ist.

3. Verfahren nach Anspruch 2,
**dadurch gekennzeichnet,**
**daß** sich jede Erhebung (14) mit zunehmenden Abstand von der Oberfläche (13) verjüngt.

4. Verfahren nach Anspruch 2 oder 3,
**dadurch gekennzeichnet,**
**daß** die Erhebungen (14) bei einem zylindrischen, insbesondere kreiszylindrischen, ersten Bauteil (6) ringförmig, insbesondere kreisringförmig, geschlossen entlang der Oberfläche (13) umlaufen.

5. Verfahren nach einem der Ansprüche 1 bis 4,
**dadurch gekennzeichnet,**
**daß** die Temperatur, mit der der Kunststoff des zweiten Bauteiles (9) in die Spritzgußform eingespritzt wird (Spritztemperatur), nahe der oberen Grenze eines Temperaturbereiches liegt, in dem das Spritzgußverfahren mit diesem Kunststoff durchführbar ist.

6. Verfahren nach einem der Ansprüche 1 bis 5,
**dadurch gekennzeichnet,**
**daß** der Druck, mit dem der Kunststoff des zweiten Bauteiles (9) in die Spritzgußform eingespritzt wird (Spritzdruck), nahe der oberen Grenze eines Druckbereiches liegt, in dem
das Spritzgußverfahren mit diesem Kunststoff durchführbar ist.

7. Verfahren nach einem der Ansprüche 1 bis 6,
**dadurch gekennzeichnet,**
**daß** der Kunststoff des ersten Bauteiles (6) relativ zum angespritzten Kunststoff des zweiten Bauteiles (9) eine hohe Viskosität aufweist.

8. Verfahren nach einem der Ansprüche 1 bis 7,
**dadurch gekennzeichnet,**
**daß** das erste Bauteil (6) als Blasteil, das heißt als ein durch ein Blasformverfahren hergestelltes Bauteil, ausgebildet ist.

9. Verfahren nach einem der Ansprüche 1 bis 8,
**dadurch gekennzeichnet,**
**daß** die Kunststoffe der beiden Bauteile (6, 9) ihre jeweilige Schmelztemperatur etwa im gleichen Temperaturbereich aufweisen.

10. Verfahren nach einem der Ansprüche 1 bis 9,
**dadurch gekennzeichnet,**
**daß** die Kunststoffe der beiden Bauteile (6, 9) jeweils nur einen relativ kleinen Temperaturbereich für die Verarbeitbarkeit ihrer Schmelzen aufweisen.

11. Verfahren nach einem der Ansprüche 1 bis 10,
**dadurch gekennzeichnet,**
**daß** die Bauteile (6, 9) jeweils aus einem Polyamid-Kunststoff bestehen.

12. Verfahren nach einem der Ansprüche 1 bis 11,
**dadurch gekennzeichnet,**
**daß** die Bauteile (6, 9) jeweils aus einem faserverstärkten, insbesondere glas- oder kohlefaserverstärkten, Kunststoff, insbesondere Polyamid-Kunststoff, bestehen.

13. Verfahren nach einem der Ansprüche 1 bis 12,
**dadurch gekennzeichnet,**
**daß** das erste Bauteil ein Saugrohr (6) einer Sauganlage (1) ist, die bei einer Brennkraftmaschine die für die Verbrennung in der Brennkraftmaschine vorgesehene Luft von einer Luftzuführung erhält und auf einzelne Brennkammern der Brennkraftmaschine verteilt, und daß das zweite Bauteil ein Flansch (9) der Sauganlage (1) ist, der an der Brennkraftmaschine befestigbar ist.

14. Verfahren nach Anspruch 13,
**dadurch gekennzeichnet,**
**daß** die Sauganlage (1) einen modularen Aufbau aufweist, mit einem Luftverteilermodul (2) aus Kunststoff, das an die Luftzuführung der Brennkraftmaschine anschließbar ist, mit mehreren, jeweils einteiligen Saugrohrmodulen (6) aus Kunststoff, die jeweils an ihrem einen Rohrende (7) mit dem Luftverteilermodul (2) verbunden sind und die jeweils einer der Brennkammern der Brennkraftmaschine zugeordnet sind, und mit mindestens einem einteiligen Flanschmodul (9) aus Kunststoff, mit dem mindestens eines der Saugrohrmodule (6) an seinem anderen Rohrende (8) verbunden ist.

## Claims

1. A method of joining a first component (6) made of plastic to a second component (9) made of plastic, where the first component (6) is introduced into an injection mold with at least a connecting section where the connection to the second component (9) is to be formed,
the second component (9) being produced by integral molding of plastic onto the connecting section (12) of the first component (6),
one surface (13) of the connecting section (12) being wetted at least partially by the plastic of the second component (9),
**characterized in that**
at least one bonding body (14) is formed on the surface (13) of the connecting section (12) which is provided for wetting by the plastic of the second component (9), said bonding body being fixedly connected to it and designed so that it melts in integral molding of the plastic of the second component (9) due to the thermal energy of the integrally molded plastic and it melts with the integrally molded plastic, whereupon the bonding body (14) is at least partially subsumed into the integrally molded plastic and becomes integrated into the integrally molded component (9).

2. The method according to Claim 1,
**characterized in that**
each bonding body (14) is formed by an elevation which projects away from the surface (13) of the connecting section (12) and is integrally molded onto the first component (6) in the manufacture of the latter, so that each bonding body (14) is produced in one piece with the connecting section (12).

3. The method according to Claim 2,
**characterized in that**
each elevation (14) tapers with increasing distance from the surface (13).

4. The method according to Claim 2 or 3,
**characterized in that**
the elevations (14) run along the surface (13) in the form of a ring, in particular a circular ring, in the case of a cylindrical first component (6), in particular a round cylindrical component.

5. The method according to one of Claims 1 through 4,
**characterized in that**
the temperature at which the plastic of the second component (9) is injected into the injection mold (injection temperature) is close to the upper limit of a temperature range in which the injection molding method can be carried out with this plastic.

6. The method according to one of Claims 1 through 5,
**characterized in that**
the pressure at which the plastic of the second component (9) is injected into the injection mold (injection pressure) is close to the upper limit of a pressure range in which the injection molding process can be carried out with this plastic.

7. The method according to one of Claims 1 through 6,
**characterized in that**
the plastic of the first component (6) has a high viscosity relative to that of the integrally molded plastic of the second component (9).

8. The method according to one of Claims 1 through 7,
**characterized in that**
the first component (6) is designed as a blow-molded part, i.e., as a component produced by a blow-molding method.

9. The method according to one of Claims 1 through 8,
**characterized in that**
the respective melting points of the plastics of the two component (6, 9) are in approximately the same range.

10. The method according to one of Claims 1 through 9,
**characterized in that**
the plastics of the two components (6, 9) each have only a relatively narrow temperature range for processing their melts.

11. The method according to one of Claims 1 through 10,
**characterized in that**
the components (6, 9) are each made of a polyamide plastic.

12. The method according to one of Claims 1 through 11,
**characterized in that**
the components (6, 9) are each made of a fiber-reinforced plastic, in particular a fiberglass-reinforced or carbon fiber-reinforced polyamide plastic.

13. The method according to one of Claims 1 through 12,
**characterized in that**
the first component is an intake manifold (6) of an intake manifold system (1) which receives the air from an air supply which is provided for combustion in the internal combustion engine and distributes it to individual combustion chambers of the internal combustion engine, and the second component is a flange (9) of the intake manifold system (1) which can be connected to the internal combustion engine.

14. The method according to Claim 13,
**characterized in that**
the intake manifold system (1) has a modular design, with an air distributor module (2) made of plastic which can be connected to the air supply of the internal combustion engine, with several intake manifold modules (6), each made of plastic and designed in one piece, connected at their one pipe end (7) to the air distributor module (2) and each assigned to one of the combustion chambers of the internal combustion engine, and with at least one flange module (9) made of plastic in one piece to which at least one of the intake manifold modules (6) is connected at its other pipe end (8).

## Revendications

1. Procédé d'assemblage d'un premier composant (6) en matière plastique avec un second composant (9) en matière plastique, le premier composant (6) étant introduit dans un moule de moulage par injection au moins par une section d'assemblage sur laquelle doit être réalisé l'assemblage avec le second composant (9), le second composant (9) étant réalisé par injection de matière plastique sur la section d'assemblage (12) du premier composant (6),
une surface (13) de la section d'assemblage (12) étant mouillée, au moins en partie, par la matière plastique du second composant (9),
**caractérisé en ce**
**qu'**il est prévu, sur la surface (13) de la section d'assemblage (12) prévue pour le mouillage par la matière plastique du second composant (9), au moins un corps de liaison (14) lié fixement à cette section, qui est réalisé de telle sorte qu'il fond lors de l'injection de la matière plastique du second composant (9), par l'énergie thermique de la matière plastique injectée, et se soude avec cette dernière, le corps de liaison (14) fusionnant au moins en partie dans la matière plastique injectée et étant intégré au composant (9) injecté.

2. Procédé suivant la revendication 1,
**caractérisé en ce**
**que** chaque corps de liaison (14) est formé par une bosse, qui dépasse de la surface (13) de la section d'assemblage (12) et est conformée sur le premier composant (6) lors de la fabrication de ce dernier, de telle sorte que chaque corps de liaison (14) est réalisé d'une seule pièce avec la section d'assemblage (12).

3. Procédé suivant la revendication 2,
**caractérisé en ce**
**que** chaque bosse (14) se rétrécit à mesure que la distance à la surface (13) croît.

4. Procédé suivant l'une des revendications 2 et 3,
**caractérisé en ce**
**que** les bosses (14), pour un premier composant (6) cylindrique, en particulier cylindrique circulaire, suivent un parcours fermé en forme d'anneau, en particulier en forme d'anneau circulaire, le long de la surface (13).

5. Procédé suivant l'une des revendications 1 à 4,
**caractérisé en ce**
**que** la température à laquelle la matière plastique du second composant (9) est injectée dans le moule à injection (température d'injection) se situe au voisinage de la limite supérieure d'une plage de température dans laquelle est réalisable le procédé de moulage par injection avec cette matière plastique.

6. Procédé suivant l'une des revendications 1 à 5,
**caractérisé en ce**
**que** la pression sous laquelle la matière plastique du second composant (9) est injectée dans le moule à injection (pression d'injection) se situe au voisinage de la limite supérieure d'une plage de pression dans laquelle est réalisable le procédé de moulage par injection avec cette matière plastique.

7. Procédé suivant l'une des revendications 1 à 6,
**caractérisé en ce**
**que** la matière plastique du premier composant (6) présente une viscosité élevée par rapport à la matière plastique injectée du second composant (9).

8. Procédé suivant l'une des revendications 1 à 7,
**caractérisé en ce**
**que** le premier composant (6) est réalisé sous forme de pièce soufflée, c'est-à-dire sous forme d'un composant fabriqué par moulage par soufflage.

9. Procédé suivant l'une des revendications 1 à 8,
**caractérisé en ce**
**que** les matières plastiques des deux composants (6, 9) présentent leurs températures de fusion respectives à peu près dans la même plage de température.

10. Procédé suivant l'une des revendications 1 à 9,
**caractérisé en ce**
**que** les matières plastiques des deux composants (6, 9) ne présentent chacun qu'une plage de température relativement petite pour la transformabilité de leurs masses fondues.

11. Procédé suivant l'une des revendications 1 à 10,
**caractérisé en ce**
**que** les composants (6, 9) sont chacun en une matière plastique à base de polyamide.

12. Procédé suivant l'une des revendications 1 à 11,
**caractérisé en ce**
**que** les composants (6, 9) sont chacun en une matière plastique, en particulier une matière plastique à base de polyamide, renforcée par des fibres, en particulier par des fibres de verre ou de carbone.

13. Procédé suivant l'une des revendications 1 à 12,
**caractérisé en ce**
**que** le premier composant est un tube d'admission (6) d'un système d'admission (1), qui reçoit d'une arrivée d'air, dans un moteur à combustion interne, l'air prévu pour la combustion dans le moteur à combustion interne et le répartit dans des chambres de combustion individuelles du moteur à combustion interne, et que le second composant est une bride (9) du système d'admission (1), qui peut être fixée sur le moteur à combustion interne.

14. Procédé suivant la revendication 13,
**caractérisé en ce**
**que** le système d'admission (1) présente une structure modulaire, comportant un module de distributeur d'air (2) en matière plastique, qui peut être raccordé à l'arrivée d'air du moteur à combustion interne, plusieurs modules de tubes d'admission (6) chacun d'une seule pièce en matière plastique, qui sont chacun assemblés à l'une de leurs extrémités tubulaires (7) avec le module de distributeur d'air (2), et qui sont chacun associés à l'une des chambres de combustion du moteur à combustion interne, et au moins un module de bride (9) d'une seule pièce en matière plastique, avec lequel est assemblé au moins l'un des modules de tube d'admission (6) à son autre extrémité (8).
